# EUROPÄISCHE PATENTANMELDUNG

(11) **EP 1 052 125 A2**
(43) Veröffentlichungstag der Anmeldung: **15.11.2000**
(21) Anmeldenummer: 00108117.3
(22) Anmeldetag: 13.04.2000
(51) Int. Cl.: B60J 3/02

(54) **Blendschutzeinrichtung für Kraftfahrzeuge**

(30) Priorität: 16.04.1999 DE 19917292
(71) Anmelder: Volkswagen Aktiengesellschaft, 38436 Wolfsburg (DE)
(72) Erfinder: Wienert, Norbert, Dipl.-Ing., 38518 Gifhorn (DE)

(57) **Zusammenfassung**

Die Erfindung betrifft eine Blendschutzeinrichtung für Kraftfahrzeuge, die im vorderen Bereich des Dachhimmels (8) angeordnet ist und von einer Nichgebrauchsstellung, in der die Blendschutzeinrichtung im wesentlichen vom Dachhimmel (8) aufgenommen bzw. in diesen eingebettet ist, in eine Gebrauchsstellung bewegbar ist, in der die Blendschutzeinrichtung in den Sichtbereich einer im Bereich des Dachhimmels (8) angeordneten Fensterscheibe hineinragt.

In Nichtgebrauchsstellung weist die Blendschutzeinrichtung ein dem Fahrzeuginnenraum zugewandtes Ende (11, 28) auf, welches im wesentlichen bündig mit dem Dachhimmel (8) abschließt. Erfindungsgemäß kann auch vorgesehen sein, daß eine Sonnenblende (16) schwenkbeweglich in einer Lagerung (20) eines Aufnahmeteils (25) aufgenommen ist, welches eine Mulde aufweist, die an einem anderen Querträger befestigbar ist. Auf diese Weise bildet die Blendschutzeinrichtung in ihrer Nichtgebrauchslage einen zum Innenraum weitestgehend harmonischen Abschluß.

## Beschreibung

Die Erfindung betrifft eine Blendschutzeinrichtung für Kraftfahrzeuge nach dem Oberbegriff von Patentanspruch 1.

Sonnenblenden als Blendschutzeinrichtungen der gattungsgemäßen Art sind durch die DE 35 12 807 C 2 und DE 40 30 996 A 1 bekannt.
So beschreibt die DE 35 12 807 C 2 eine Sonnenblende, die als gepolsterte Platte ausgebildet ist und in ihrer Ruhelage bzw. Nichtgebrauchslage am Dach des Kraftfahrzeuges vorgesehen ist und in ihrer Gebrauchslage nach unten abgeschwenkt werden kann. Dabei ist die Sonnenblende so ausgeführt, daß ihre Führung zwei Führungsbahnen aufweist, in denen jeweils ein Führungszapfen der Sonnenblende verschiebbar und verdrehbar geführt sind, wobei die beiden Führungszapfen gegeneinander achsversetzt angeordnet sind, und ferner wird ausgeführt, daß die vorderen Endabschnitte der Führungsbahnen relativ zueinander derart verlaufen, daß der eine Führungszapfen, der in der Gebrauchslage der Sonnenblende im Abstand vor dem anderen Führungszapfen angeordnet ist, entlang des vorderen Endabschnittes der ihm zugeordneten Führungsbahn zu dem anderen Führungszapfen nach unten verlagert wird. Mit der vorgestellten Sonnenblende soll erreicht werden, daß eine gewisse Kopffreiheit des Fahrers zur Windschutzscheibe und zum Dachhimmel gegeben ist, was wohl möglich ist, allerdings ist die Lagerung und die Führung der Sonnenblende sehr kompliziert und somit sehr kostenaufwendig.

Die mit der DE 40 30 996 A 1 vorgestellte Blendschutzvorrichtung ist im weitesten Sinne auch als Sonnenblende ausgebildet, die als Baueinheit in Form eines Gehäusekastens in einer Aussparung der Himmelverkleidung im Dachbereich eines Kraftfahrzeuges vorgesehen ist.

Diese Blendschutzvorrichtung besteht aus dem Gehäusekasten und aus einer Baueinheit, die im Gehäusekasten klappbar gelagert ist. Die Baueinheit selbst besteht im wesentlichen aus einer oberen Profilleiste, die über Gelenkzapfen mit dem Gehäusekasten klappbeweglich verbunden ist und ferner aus einer unteren Profilleiste.

Diese untere Profilleiste soll gleichfalls als Betätigungselement dienen, und zwischen beiden Profilleisten sind schwenkbeweglich gelagerte Lamellenstreifen angeordnet, die bei Betätigung der unteren Profilleiste aus dem Gehäuseteil herausgezogen werden, eine Fläche bilden, die im weitesten Sinne die Sonnenblende darstellen.
Neben der doch sehr komplizierten Bau- und Funktionsweise der Blendschutzvorrichtung ist auch nachteilig, daß die gesamte Vorrichtung von ihren baulichen Abmaßen die Kopffreiheit im Frontbereich eines Kraftfahrzeuges wesentlich verringert und schließlich keine Abdeckung zum Innenraum des Kraftfahrzeuges gegeben ist.

Der Erfindung liegt die Aufgabe zugrunde, eine gattungsgemäße Blendschutzeinrichtung für Kraftfahrzeuge zu entwickeln, die so im Dachbereich des Kraftfahrzeuges angeordnet ist, daß sie in ihrer Nichtgebrauchslage einen zum Innenraum weitestgehend harmonischen Abschluß bildet.

Erfindungsgemäß wird die Aufgabe mit den Merkmalen der Ansprüche 1 und 13 gelöst.

Bevorzugte Merkmale, die die Erfindung vorteilhaft weiterbilden, sind den nachgeordneten Patentansprüchen zu entnehmen.

Erfindungsgemäß weist die Blendschutzeinrichtung ein dem Fahrzeuginnenraum zugewandtes Ende auf, welches im wesentlichen bündig mit dem Dachhimmel abschließt.

Ferner ist eine Blendschutzeinrichtung ersichtlich, die innerhalb der herausgebildeten Kalotte zwischen der Dachhaut bzw. dem Dachhimmel und dem vorderen Querträger eines Kraftfahrzeuges angeordnet ist.
Die Blendschutzeinrichtung besteht dabei aus zwei Führungen, in denen jeweils ein Führungsstab längsbeweglich geführt ist, wobei die beiden Führungen mit einem bestimmten Abstand zueinander jeweils in einer Lagerung und einer Lagerscheibe im Querträger angeordnet sind. Die Führungen besitzen gewisse Krümmungen, mit denen verständlicherweise auch die in den Führungen gelagerten Führungsstäbe ausgebildet sind. Unmittelbar zur Blendschutzeinrichtung gehören ferner zwei Rolleinrichtungen, die unterhalb des Dachquerträgers im Bereich der Lagerscheibe vorgesehen sind und von der Innenverkleidung, dem Dachhimmel, abgedeckt sind. Die Rolleinrichtungen sind dabei stabförmig ausgebildet und erstrecken sich in ihrer Länge über den seitlichen Abstand der beiden Führungen und sind Träger von rolloartigem Schutzmaterial, welches in aufgewickelter Form auf den Rolleinrichtungen vorliegt und bei Betätigung, d. h. beim Herausziehen der Führungsstäbe aus den Führungen von den Rolleinrichtungen, abgezogen wird. Vorgesehene Umlenkrollen geben dem abgezogenen Rollomaterial die entsprechenden Führungen, so daß bei voll herausgezogenen oder herausgefahrenen Führungsstäben sich eine vollflächige Sonnenblende herausbildet.
Die Sonnenblende kann dabei durch Handbetätigung der Führungsstäbe herausgebildet werden oder aber auch durch einen vorgesehenen elektrischen Antrieb, welcher vorzugsweise in der Lagerung der Führungen vorgesehen ist und bei Betätigung dessen die Führungsstäbe aus den Führungen herausgefahren werden.

Zur Erfindung gemäß Anspruch 13 gehört auch, daß ein Aufnahmeteil mit einer Mulde vorgesehen ist, welches an einem vorderen Querträger befestigbar ist, wobei in einer Lagerung des Aufnahmeteils eine Sonnenblende schwenkbeweglich aufgenommen ist. Die Lagerung dieser Sonnenblende ist dabei beispielsweise nach dem Push-Push-Prinzip ausgebildet, wobei die Lagerung auch nach einem anders wirkenden Arbeitsprinzip ausgebildet sein kann. Voraussetzung ist, daß mit dieser Lagerung verschiedene Rasterstellungen der Sonnenblende realisierbar sind.
Diese geschaffene Blendschutzeinrichtung ist so ausgeführt, daß sie mit ihrem Aufnahmeteil, wie bereits ausgeführt, unmittelbar am vorderen Querträger einrastbar und verschraubbar ist und ferner an ihren Endbereichen Abkantungen besitzt, die so ausgebildet sind, daß sie im oberen Bereich in entsprechenden Vertiefungen der Verkleidung vom Dachhimmel des Kraftfahrzeuges eingreifen und zur Windschutzscheibe Dichtungen anordbar sind, die die erforderliche Abdichtung vornehmen. Die vorgesehene Sonnenblende weist dabei eine Wölbung auf, die dem Verlauf des Dachhimmels folgt, so daß bei der Ruhelage der Sonnenblende diese Wölbung dem Verlauf des Dachhimmels ausgebildet ist, was sowohl technisch als auch optisch von Vorteil ist.
Die Lagerung der Sonnenblende ermöglicht, daß diese neben ihrer Nichtgebrauchslage und Endstellung in auch Zwischenstellungen positioniert werden kann, je nach Bedarf in und Wunsch des Kraftfahrzeugführers.

Mit nachfolgendem Ausführungsbeispiel soll die Erfindung näher erläutert werden.

Die dazugehörige Zeichnung zeigt in
- Figur 1:: die Ausbildung und Anordnung der Blendschutzeinrichtung in Ruhestellung/Nichtgebrauchslage
- Figur 2:: die Blendschutzeinrichtung im Betriebszustand
- Figur 3:: den vorderen Innenraumbereich eines Fahrzeuges mit Blick auf die Windschutzscheibe mit ausgefahrenen Rollos
- Figur 4:: eine schwenkbar gelagerte Blendschutzeinrichtung
- Figur 5:: eine weitere Ausführungsform einer Blendschutzeinrichtung

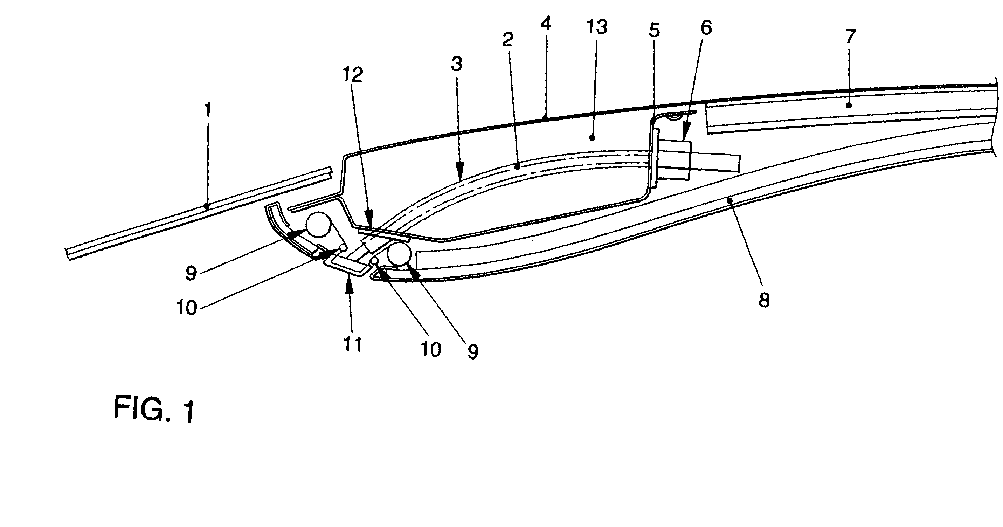

Die Figur 1 zeigt die Ausbildung des Frontbereiches eines Kraftfahrzeuges in einer Seitenansicht in schematischer Darstellung, aus der sich ergibt, wie die Blendschutzeinrichtung ausgebildet und gelagert ist. Die Blendschutzeinrichtung besteht dabei aus zwei mit einem gewissen Abstand zueinander vorgesehenen Führungen 3, in denen je ein Führungsstab 2 in seiner Längsachse beweglich bzw. verschiebbar gelagert ist. Aufgrund der Anordnung und Ausbildung der Blendschutzeinrichtung ist in dieser Darstellung nur eine Führung 3 gezeigt, die zweite ist beabstandet zur ersten Führung 3 in gleicher Ebene dahinter angeordnet. Dies bedeutet, zu einer Blendschutzeinrichtung gehören somit zwei Führungen 3, die im vorderen Dachträger 7 eines Fahrzeuges einerseits über eine Lagerung 6 und andererseits über eine Lagerscheibe 12 zum vorderen Querträger 5 befestigt sind. Der vordere Querträger 5 ist dabei so ausgebildet und zum Dachträger 7 befestigt, daß sich eine sogenannte Kalotte 13 herausbildet, in der die gekrümmt verlaufenden Führungen 3 eingeordnet sind. Das Krümmungsmaß der Führungen 3 entspricht einem ganz bestimmten Radius, mit dem die in den Führungen 3 vorgesehenen Führungsstäbe 2 gleichfalls ausgerüstet sind, und dieser Krümmungsradius bedingt, daß
beim Herausziehen oder Herausfahren der Führungsstäbe 2 aus den Führungen 3 der erforderliche Sicht- bzw. Blendschutz erreicht wird, andernfalls aber auch gesichert ist, daß die herausgefahrene Blendschutzeinrichtung weder die Bewegungsfreiheit des Fahrers noch dessen Sichtbereich beeinträchtigt.
Zur Blendschutzeinrichtung gehören ferner Rolleinrichtungen 9, auf denen rolloartiges Material auf- und abwickelbar vorgesehen ist. Im weitesten Sinne wirken diese Rolleinrichtungen 9 in Verbindung mit dem darauf befindlichen Material als Rollos 14, die mit der Betätigung und Bewegungsausführung der Führungsstäbe 2 gleichfalls in Funktion gesetzt werden.
Am vorderen Ende der Führungsstäbe 2 besitzen diese ein Endstück 11, welches bevorzugterweise als ein Längsteil ausgebildet ist und vom ersten Führungsstab 2 bis zum zweiten Führungsstab 2 der dahinter liegenden Führung 3 ausgebildet ist. Das rolloartige Material ist an diesem Endstück befestigt, wird über Umlenkrollen 10 geführt, die zwischen der jeweiligen Rolleinrichtung 9 und dem Endstück 11 vorgesehen sind.

Die gesamte Blendschutzeinrichtung ist so innerhalb des Frontbereiches eines Kraftfahrzeuges, also zwischen der Windschutzscheibe 1 und der Dachhaut 4, eingeordnet, daß lediglich die Endstücke 11 der Führungsstäbe 2 den Verlauf des Dachhimmels 8 unterbrechen, wobei die Endstücke 11 so ausgeformt und in der Nichtgebrauchslage der Blendschutzeinrichtung eine Position einnehmen, die der Form des Dachhimmels 8 entsprechen und somit höchsten Anforderungen an Ästhetik und Design entsprochen wird.

Die Führungen 3 als auch die Führungsstäbe 2 können dabei aus unterschiedlichen Materialien hergestellt sein, wobei vorteilhafterweise die Ausbildung aus einem Kunststoff sinnvoll ist, da einmal die Herstellung derartiger Führungen 3 und Führungsstäbe 2 kostengünstig ist, und ferner wirkt sich dies positiv auf die Masse einer derartigen Blendschutzeinrichtung aus. Die Führungen 3 als auch die Führungsstäbe 2 können dabei mit verschiedenen Querschnittsformen ausgeführt sein, wobei vorteilhafterweise diese Bauteile mit kreisrunden Querschnitten auszuführen sind. Neben der Ausführung dieser Bauteile mit kreisrunden Querschnitten können diese auch rechteckige, quadratische oder andere Querschnittsformen aufweisen.

Stall der Führungsstäbe 2, die als Grundkörper der Blendschutzeinrichtung angesehen werden können, könnte man sich auch einen einzigen flächigen, gekrümmten Grundkörper in Form einer Sonnenblende vorstellen, der entsprechend geführt ist. Das rolloartige Blendschutzmaterial könnte dann entfallen.

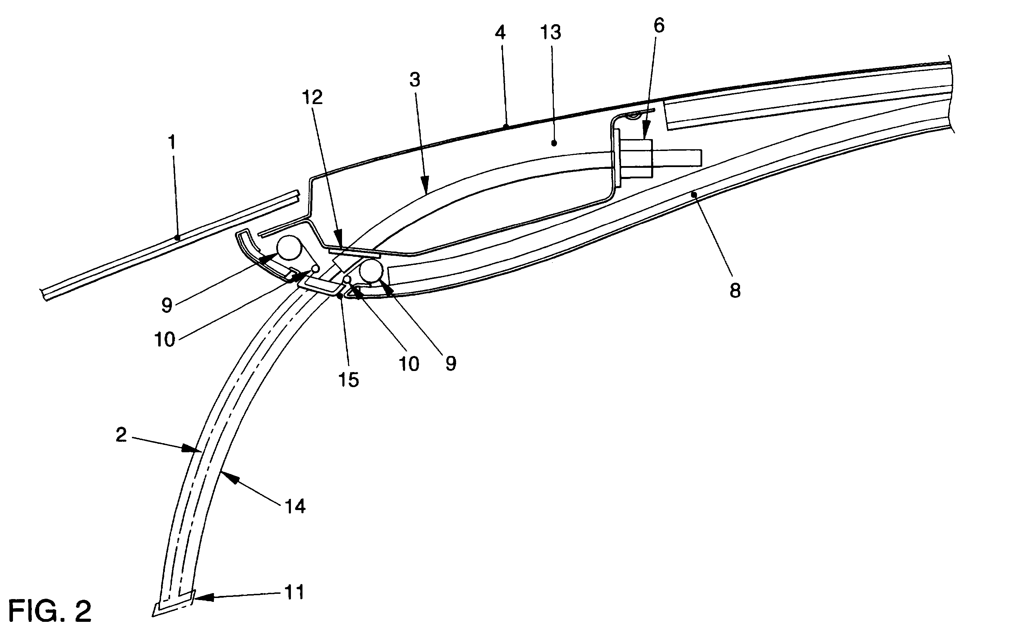

Während die Darstellung nach Figur 1 die Ruhestellung oder Nichtgebrauchslage der Blendschutzeinrichtung zeigt, wird in der Figur 2 der Betriebszustand der vorgestellten Blendschutzeinrichtung dargestellt. Gezeigt ist, wie die Führungsstäbe 2 aus den Führungen 3 herausgezogen oder herausgeschoben wurden. Dies ist abhängig, wie die Lagerung 6 ausgebildet ist. Neben der Handbetätigung der Führungsstäbe 2 ist es selbstverständlich auch möglich, durch das Vorsehen eines vorzugsweise elektrischen Antriebes im Bereich der Lagerung 6 die Führungsstäbe 2 mechanisch aus ihren Führungen 3 heraus zu verfahren. Durch einen derartigen mechanischen Antrieb wird das Handling der Blendschutzeinrichtung günstiger gestaltet, da das Schaltorgan zur Betätigung eines elektrischen Antriebes unmittelbar im Lenkradbereich untergebracht sein kann, so daß der Fahrer lediglich durch entsprechenden Tastendruck die Blendschutzeinrichtung in Funktion setzen kann. Es ist aber auch möglich, wie bereits erwähnt, daß die Blendschutzeinrichtung durch Handbetätigung in ihren Betriebszustand verbracht wird. Zu diesem Zweck kann das Endstück 11 der Führungsstäbe 2 mit entsprechenden Eingriffsmulden versehen werden, um eine sichere Handhabung zu gewährleisten.
Aus der Figur 2 ergibt sich ferner, daß bei dem Herausziehen oder Herausfahren der Führungsstäbe 2 das auf den Rolleinrichtungen 9 befindliche Rollomaterial abgezogen wird, so daß im ausgefahren Zustand dieser Einrichtung sich eine Sonnenblende herausbildet, die einerseits aus den Führungsstäben 2 mit ihrem Endstück 11 und den beidseitig der Führungsstäbe 2 vorgesehenen Rollos 14 gebildet wird. Die im Dachhimmel 8 vorgesehene Austrittsöffnung 15 ist so ausgebildet, daß eine gewisse Kulisse in dieser Austrittsöffnung 15 vorgesehen ist, über die die Rollos 14 eine zusätzliche Führung erhalten.
Die Darstellung nach Figur 2 zeigt die Endlage der Blendschutzeinrichtung, d. h. im voll ausgefahrenen Zustand, wobei auch Zwischenstellungen zwischen der Ruhelage und der Endstellung möglich sind. Diese Zwischenstellungen der Sonnenblende sind sowohl bei Handbetätigung als auch bei mechanischer Betätigung der Führungsstäbe 2 möglich.

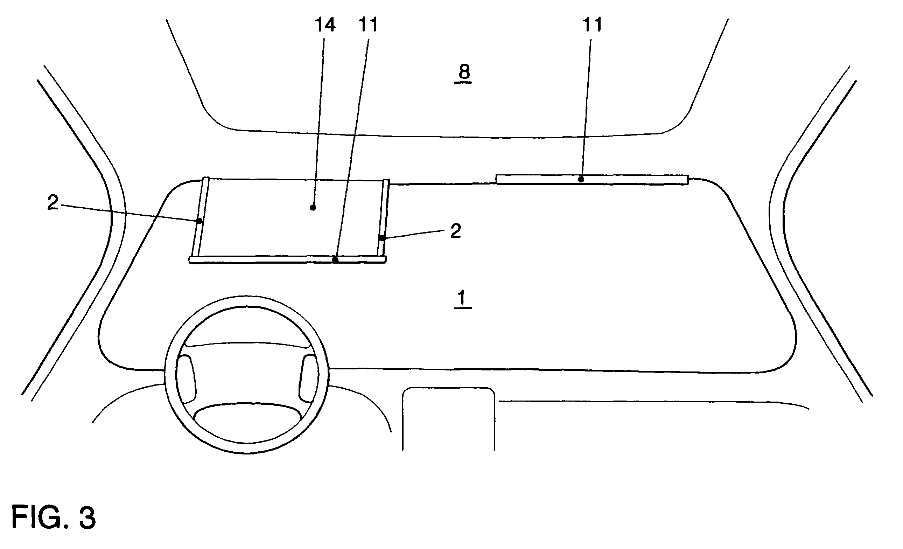

Mit der Darstellung nach Figur 3 soll verdeutlicht werden, wie sich die vorgestellte Blendschutzeinrichtung in den Frontbereich eines Kraftfahrzeuges eingliedert. Auf der Fahrerseite ist der Betriebszustand dargestellt, hier sind die als Sonnenblende wirkenden Rollos 14 voll ausgefahren, während auf der Beifahrerseite die Nichtgebrauchslage dargestellt ist, und mit der Ausbildung des Endstückes 11 soll verdeutlicht werden, daß in der Ruhelage der Blendschutzeinrichtung keine störenden Elemente im Frontbereich vorhanden sind.

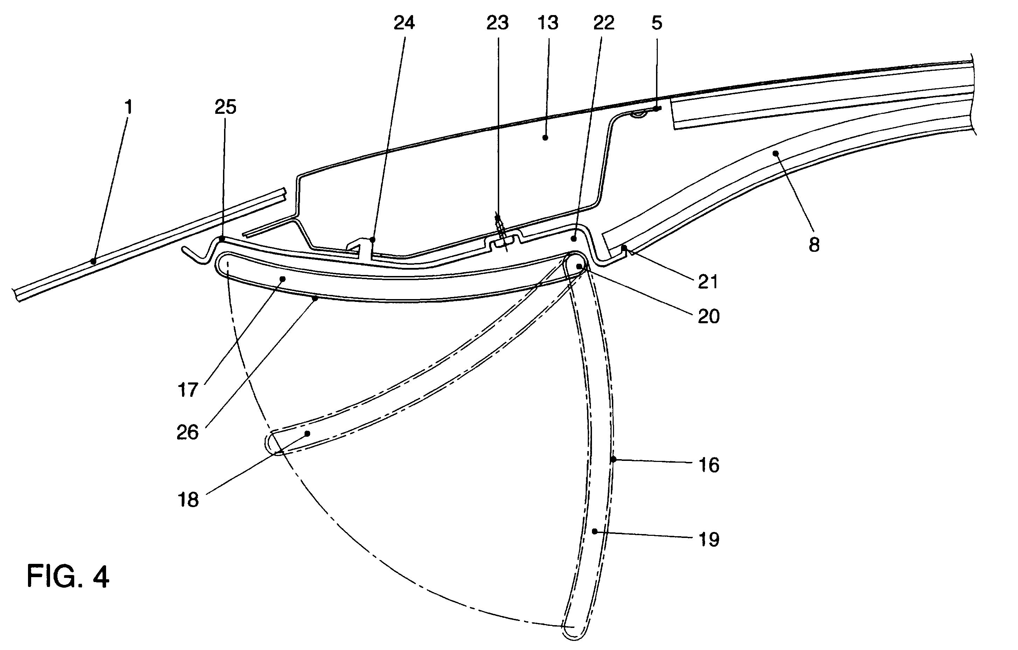

Die zweite geschaffene Lösung wird in der Figur 4 gezeigt, aus der sich nicht nur die Ausbildung und Einordnung dieser Blendschutzeinrichtung ergibt, sondern auch eine Sonnenblende 16 gezeigt ist, die verschiedene Stellungen einnehmen kann; so die Nichtgebrauchslage 17, eine Zwischenstellung 18 und eine Endstellung 19, die Stellung, in der die Sonnenblende am weitesten aus ihrer Ruhelage ausgeschwenkt ist.
Diese Blendschutzeinrichtung besteht dabei aus einem Aufnahmeteil 25, welches vorzugsweise aus Kunststoff hergestellt und gleichfalls am vorderen Querträger 5 eines Kraftfahrzeuges befestigt ist. Dies erfolgt einmal über Rasthaken 24, die unmittelbar mit dem Aufnahmeteil 25 ausgebildet sind und den Querträger 5 hintergreifen und zum anderen über eine Verschraubung 23. Das Aufnahmeteil 25 ist dabei besonders geformt gestaltet und mit einer Mulde 22 versehen, die in seitliche Profilierungen/Abkantungen übergehen, die wiederum die Verbindung des Aufnahmeteiles 25 zur Windschutzscheibe 1 und zum Dachhimmel 8 schaffen. Die Verbindung des Aufnahmeteiles 25 zum Dachhimmel 8 erfolgt dabei über eine Arretierung 21 derart, daß im weitesten Sinne an der äußeren Abkantung des Aufnahmeteiles 25 eine Nase vorgesehen ist, die in eine Aussparung des Dachhimmels 8 eingreift.
Unmittelbar zur Blendschutzeinrichtung gehört die gekrümmt ausgebildete Sonnenblende 16, welche als flächenhaftes Teil ausgebildet ist und vorzugsweise allflächig mit einer Polsterung versehen ist. Diese Sonnenblende 16 ist einseitig in der Sonnenblendlagerung 20 befestigt, wobei diese Sonnenblendlagerung 20 nach dem Push-Push-Prinzip arbeitet, um die Sonnenblende 16 in die gewünschten Verstellpositionen zu verbringen.
Dies geschieht in der Art und Weise, daß in Pfeilrichtung 26 ein gewisser Druck auf die Sonnenblende 16, welche sich in ihrer Nichtgebrauchslage 17 befindet, ausgeübt wird, wodurch die Arretierung in der Sonnenblendlagerung 20 aufgehoben und die Sonnenblende 16 zum Innenraum hin geschwenkt werden kann. Die Ausbildung der Sonnenblendlagerung 20 gestattet, daß die Sonnenblende 16 verschiedene Positionen einnehmen kann. Gezeigt sind eine Zwischenstellung 18 und eine Endstellung 19. Weitere Zwischenstellungen sind durchaus möglich.
Auch bei dieser Blendschutzeinrichtung wurde darauf Wert gelegt, daß durch die Anordnung der Sonnenblende 16 in ihrer Nichtgebrauchslage 17 keine Ansätze oder Erhebungen vorhanden sind, sondern durch die besonders gestaltete Sonnenblende ein harmonischer Verlauf der Kontur des Dachhimmels 8 gegeben ist, was einem guten Design entspricht.

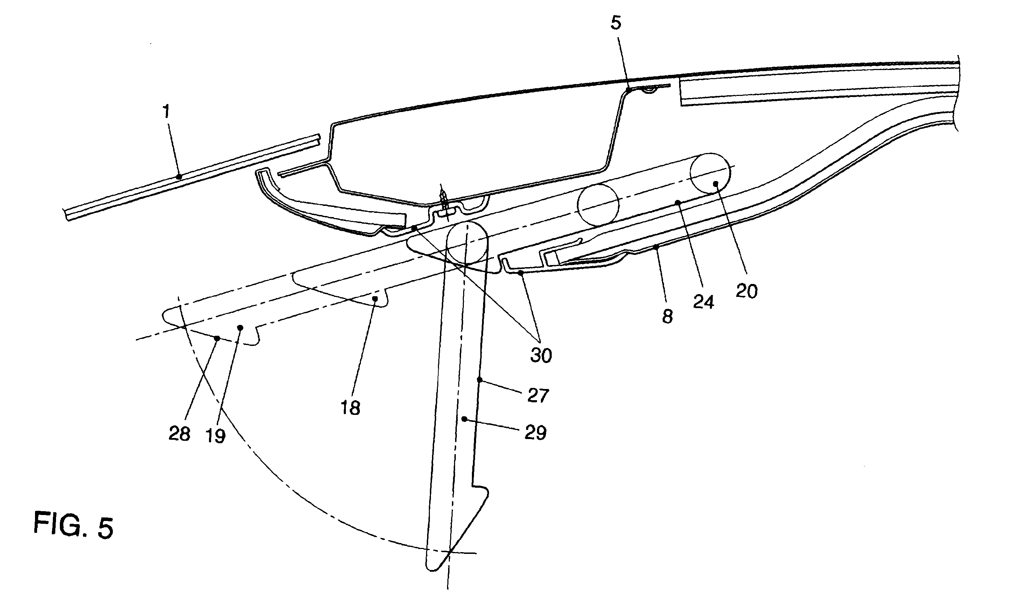

Mit der Darstellung nach Figur 5 wird ein weiteres Ausführungsbeispiel einer erfindungsgemäßen Blendschutzeinrichtung nach Anspruch 1 vorgestellt. Hier handelt es sich um eine eben ausgebildete flächenhafte Sonnenblende 27, die zwischen dem Dachhimmel 8 und dem vorderen Querträger 5 angeordnet ist. Die flächenhafte Sonnenblende 27 besitzt an ihrer Stirnseite 28 eine besondere Ausformung, die bei der Nichtgebrauchsstellung der Sonnenblende 27 die Austrittsöffnung im Dachhimmel 8 formschön und bündig abschließt bzw. verdeckt.
Auch diese vorgestellte Lösung gestattet, die Sonnenblende 27 in verschiedenen Positionen aus ihrer Lagerung herauszuziehen, was auch hier von Hand oder auch mechanisch erfolgen kann. Nach vollständigem Herausziehen der Sonnenblende 27 kann diese nach unten in eine im wesentlichen vertikale Position 29 geschwenkt werden. Ferner gestattet die vorgestellte Blendschutzeinrichtung die Verwendung als seitliche, das Seitenfenster abdeckende Blendschutzeinrichtung zu nutzen. Hierzu bedarf es der einseitigen Entriegelung der Sonnenblende 27 aus ihrer Lagerung, so daß die Sonnenblende gedreht werden kann, was nicht näher dargestellt ist.

Die Austrittsöffnung bei dieser Ausführungsform ist beidseitig mit Blenden 30 versehen, die so ausgebildet und angeordnet sind, daß sie sich in den harmonischen Verlauf des Dachhimmels 8 eingliedern.

## Patentansprüche

1. Blendschutzeinrichtung für Kraftfahrzeuge, die im vorderen Bereich des Dachhimmels (8) angeordnet ist und von einer Nichgebrauchsstellung, in der die Blendschutzeinrichtung im wesentlichen vom Dachhimmel (8) aufgenommen bzw. in diesen eingebettet ist, in eine Gebrauchsstellung bewegbar ist, in der die Blendschutzeinrichtung in den Sichtbereich einer im Bereich des Dachhimmels (8) angeordneten Fensterscheibe hineinragt, **dadurch gekennzeichnet**, daß in Nichtgebrauchsstellung die Blendschutzeinrichtung ein dem Fahrzeuginnenraum zugewandtes Ende (11, 28) aufweist, welches im wesentlichen bündig mit dem Dachhimmel (8) abschließt.

2. Blendschutzeinrichtung für Kraftfahrzeuge nach Anspruch 1, **dadurch gekennzeichnet**, daß die Blendschutzeinrichtung wenigstens einen gekrümmten Grundkörper (2) aufweist, der in wenigstens einem Führungsmittel (3) derart geführt ist, daß sich der Grundkörper (2) beim Bewegen zwischen der Nichtgebrauchsstellung und der Gebrauchsstellung auf einer gekrümmten, den Fahrzeuginnenraum gerichteten Bahn bewegt.

3. Blendschutzeinrichtung für Kraftfahrzeuge nach Anspruch 2, **dadurch gekennzeichnet,** daß zwei Grundkörper (2) in Form von zwei beabstandeten Stäben vorgesehen sind und die Führungsmittel (3) als zwei beabstandete Führungen, in denen die Stäbe längsbeweglich gelagert sind, wobei Blendschutzmaterial (14) bewegungsmäßig mit den Grundkörpern (2) direkt oder indirekt gekoppelt ist, derart, daß es sich beim Bewegen der Blendschutzeinrichtung zwischen der Nichtgebrauchsstellung und der Gebrauchsstellung ab- bzw. aufwickelt.

4. Blendschutzeinrichtung für Kraftfahrzeuge nach Anspruch 3, **dadurch gekennzeichnet**, daß das Ende (11) der Blendschutzeinrichtung als ein längliches Endstück ausgebildet ist, welches die Stäbe (2) miteinander verbindet.

5. Blendschutzeinrichtung für Kraftfahrzeuge nach Anspruch 3 oder 4, **dadurch gekennzeichnet,** daß das Blendschutzmaterial (14) in Form von Rollos ausgebildet ist, wobei die Rollos (14) über Umlenkrollen (10) geführt, auf Rolleneinrichtungen (9) auf- und abwickelbar sind und die Rolleneinrichtungen (9) quer zu den Führungen (3) drehbeweglich gelagert sind.

6. Blendschutzeinrichtung für Kraftfahrzeuge nach Anspruch 5**, dadurch gekennzeichnet,** daß sich die Blendschutzeinrichtung unterhalb eines am Fahrzeug vorgesehenen, vorderen Dachträgers (7) befindet, wobei die Rolleneinrichtungen (9) unterhalb eines vorderen Querträgers (5) und die Führungen (3) im wesentlichen innerhalb des vorderen Querträgers (5) zwischen einer Dachhaut (4) und dem Dachhimmel (8) angeordnet sind.

7. Blendschutzeinrichtung für Kraftfahrzeuge nach einem der Ansprüche 2 bis 6, **dadurch gekennzeichnet,** daß die Führungen (3) mit einer gekrümmten Längsform ausgebildet und über eine Lagerung (6) und eine Lagerscheibe (12) am vorderen Querträger (5) befestigt sind, daß die Führungsstäbe (2) mit gleicher Krümmung ausgeführt und die Führungen (3) und die Führungstäbe (2) vorzugsweise aus Kunststoff hergestellt sind.

8. Blendschutzeinrichtung für Kraftfahrzeuge nach Anspruch 7**, dadurch gekennzeichnet,** daß die Lagerung (6) als elektrischer Antrieb ausgebildet ist, der über eine vorzugsweise im Lenkrad angeordnete Betätigungstaste ansteuerbar ist.

9. Blendschutzeinrichtung für Kraftfahrzeuge nach einem der Ansprüche 5 bis 8, **dadurch gekennzeichnet,** daß die Rolleneinrichtungen (9) mit einer Raster/Arretiereinrichtung ausgebildet sind.

10. Blendschutzeinrichtung für Kraftfahrzeuge nach Anspruch 1, **dadurch gekennzeichnet,** daß die Blendschutzeinrichtung (27) zwischen einem vorderen Querträger (5) und dem Dachhimmel (8) angeordnet ist.

11. Blendschutzeinrichtung für Kraftfahrzeuge nach Anspruch 1 oder 10, **dadurch gekennzeichnet,** daß die Blendschutzeinrichtung als im wesentlich ebene, flächenhafte Sonnenblende (27) ausgebildet ist.

12. Blendschutzeinrichtung für Kraftfahrzeuge nach einem der Ansprüche 1, 10 oder 11, **dadurch gekennzeichnet,** daß die Blendschutzeinrichtung aus ihrer Nichtgebrauchsstellung in verschiedenen Positionen herausziehbar ist.

13. Blendschutzeinrichtung für Kraftfahrzeuge nach dem Oberbegriff von Anspruch 1, **dadurch gekennzeichnet,** daß ein Aufnahmeteil (25) mit einer Mulde (22) vorgesehen ist, welches an einem vorderen Querträger (5) befestigbar ist, wobei in einer Lagerung (20) des Aufnahmeteils (25) eine Sonnenblende (16) schwenkbeweglich aufgenommen ist.

14. Blendschutzeinrichtung für Kraftfahrzeuge nach Anspruch 13, **dadurch gekennzeichnet,** daß die Sonnenblende (16) als flächenhaftes Element mit konkaver Form ausgebildet ist und die Sonnenblende (16) dem Verlauf des Dachhimmels (8) angepaßt ist.

15. Blendschutzvorrichtung für Kraftfahrzeuge nach Anspruch 13 oder 14, **dadurch gekennzeichnet,** daß die Sonnenblende (16) mit einer Polsterung ausgeführt und deren Lagerung (20) nach dem Push-Push-Prinzip ausgebildet ist, wodurch mehrere Stellungen der Sonnenblende (16), beispielsweise die Nichtgebrauchslage (17), die Zwischenstellung (18) und die Endstellung (19), realisierbar sind.

16. Blendschutzeinrichtung für Kraftfahrzeuge nach einem der Ansprüche 13 bis 15, **dadurch gekennzeichnet,** daß die Mulde (22) beidseitig mit Abkantungen ausgebildet ist, deren eine Kantung in einer Nabe übergeht, die in einer Arretierung (21) des Dachhimmels (8) eingreift, während die andere Abkantung über eine Dichtung an der Windschutzscheibe (1) anliegt.
